# EUROPÄISCHE PATENTANMELDUNG

(11) **EP 4 699 961 A1**
(43) Veröffentlichungstag der Anmeldung: **25.02.2026**
(21) Anmeldenummer: 25195996.1
(22) Anmeldetag: 14.08.2025
(51) Int. Cl.: B65G 13/04, B65G 47/26, B65G 13/07

(54) **ROLLENBAHN ZUM FÖRDERN VON FÖRDERGUT SOWIE VERFAHREN ZUM BETRIEB DER ROLLENBAHN**

(30) Priorität: 22.08.2024 DE 102024124039
(71) Anmelder: König Maschinenbau GmbH, 68542 Heddesheim (DE)
(72) Erfinder: Antes, Patrick, 64646 Heppenheim (DE)
(74) Vertreter: Bauer PSU PartG mbB

(57) **Zusammenfassung**

Die vorliegende Erfindung betrifft eine Rollenbahn (1) zum Fördern von Fördergut (2, 3, 4).

Um die Rollenbahn (1) dahingehend weiterzuentwickeln, dass mittels der Rollenbahn (1) ein Kraftschluss zwischen der Antriebskette (8) und den Förderrollen (5) zuverlässig ein- und ausschaltbar ist, ist erfindungsgemäß vorgesehen, dass eine erste Betätigungseinrichtung (35), die eine erste Vorauslöseeinrichtung (37) und eine erste Auslöseeinrichtung (39) aufweist und mit der die erste Schalteinrichtung (9) betätigbar ist, wobei das mindestens eine Schaltelement (10) der ersten Schalteinrichtung (9) von der Aktivstellung dadurch in die Passivstellung überführbar ist, dass ein Vorauslöseelement (47) der ersten Vorauslöseeinrichtung (37) in eine Vorauslösestellung und ein Auslöseelement (48) der ersten Auslöseeinrichtung (39) in eine Auslösestellung gebracht wird, wobei das Vorauslöseelement (47) der ersten Vorauslöseeinrichtung (37) von einem auf dem zweiten Förderabschnitt (13) stillstehenden Fördergut (2) aktivierbar und das Auslöseelement (48) der ersten Auslöseeinrichtung (39) von einem auf dem ersten Förderabschnitt (13) befindlichen weiteren Fördergut (3) aktivierbar ist.

Ferner betrifft die vorliegende Erfindung ein Verfahren zum Betrieb der erfindungsgemäßen Rollenbahn (1).

## Beschreibung

### Einleitung

Die vorliegende Erfindung betrifft eine Rollenbahn zum Fördern von Fördergut gemäß dem Oberbegriff von Anspruch 1. Ferner betrifft die Erfindung ein Verfahren zum Betrieb der Rollenbahn zum Fördern von Fördergut gemäß dem Oberbegriff von Anspruch 12.

Die Rollenbahn umfasst
- ein Maschinengestell,
- zumindest eine umlaufende Antriebskette,
- zumindest eine Antriebseinrichtung zum Antrieb der Antriebskette,
- zumindest zwei in eine Förderrichtung aneinander angrenzende Förderabschnitte, die jeweils umfassen:
   eine Vielzahl von antreibbaren, zylinderförmigen Förderrollen, deren jeweiligen nach oben gerichteten Oberflächen gemeinsam eine Rollenebene bilden, die eine Förderebene definiert, und wobei jede Förderrolle eine Drehachse aufweist, und benachbarte Drehachsen gemeinsam eine Achsebene definieren,
   eine Vielzahl von Ritzeln, die jeweils koaxial zu einer zugeordneten Förderrolle sowie an deren Stirnseite oder - in axiale Richtung versetzt außerhalb einer vertikalen Projektion der Rollenbahn - neben deren Stirnseite sowie eines von der Rollenbahn definierten Förderquerschnitts angeordnet sind,
   mindestens eine Schalteinrichtung, mit der jeweils ein Kraftschluss zwischen der Antriebskette und den Förderrollen jeweils eines Förderabschnitts ein- und ausschaltbar ist und die jeweils mindestens ein Schaltelement aufweisen, das dazu eingerichtet ist, von einer Passivstellung in eine Aktivstellung und umgekehrt überführt zu werden,
wobei eine erste Schalteinrichtung einem ersten Förderabschnitt und eine zweite Schalteinrichtung einem nullten Förderabschnitt zugeordnet ist.

### Stand der Technik

Insbesondere in der Getränkeindustrie wird Fördergut in Form von diskreten Ladungsträgern, wie beispielsweise Mehrweg-Getränkekisten oder Ladungsträgern in Form von Paletten auf Rollenbahnen, gefördert. Die aus dem Stand der Technik bekannten Rollenbahnen besitzen jeweils eine Vielzahl von angetriebenen Rollen, deren nach oben gerichteten Oberflächen eine Bahn bilden, die durch geeignete Führungselemente nach rechts und links begrenzt ist und somit einen geführten Transport der Getränkekisten bzw. auch palettenförmiger Ladungsträger ermöglicht.

Der Antrieb jeder einzelnen Förderrolle der Rollenbahn erfolgt typischerweise mit Hilfe jeweils eines Ritzels, das stirnseitig an jeder Förderrolle angeordnet ist und mit einer unterhalb der Rollenbahn angeordneten und parallel zu dieser verlaufenden Rollenkette zusammenwirkt.

In der DE 15 06 905 wird eine derartige Fördereinrichtung zur Aufnahme einer Last mit Hilfe eines Tragorgans beschrieben, wobei das Tragorgan aus Förderrollen gebildet ist. Die Förderrollen werden mittels Reibung von einem Plattengliederband angetrieben. Das Plattengliederband wird wiederum mittels einer mit einem Motorantrieb verbundenen Rollenkette angetrieben. Die Tragvorrichtung ist gänzlich oder lediglich in bestimmten Längsabschnitten mit einer Vorrichtung zum vorübergehenden Anheben der Rollenachsen versehen. Die Vorrichtung ist dabei in Form einer Schiene ausgebildet, die verschiebbar ist. Die Schiene weist den jeweiligen Rollenachsen zugeordnete Nocken auf, die bei einer vertikalen Bewegung der Schiene dafür sorgen, dass sich die Förderrollen von dem Plattengliederband abheben. Mangels eines Kontakts mit dem Plattengliederband wird die Förderbewegung der auf den Rollen befindlichen Last somit augenblicklich unterbrochen. Das heißt, um eine Unterbrechung der Förderbewegung zu bewirken, werden die Förderrollen in eine vertikale Richtung weg von dem Plattengliederband angehoben.

In der DE 35 03 052 C1 wird eine Staurollenbahn beschrieben, bei der die Förderrollen mittels eines Radträgers von einer Freilaufstellung in eine Antriebsstellung und in umgekehrte Richtung überführbar sind. Hierzu weist die dort beschriebene Vorrichtung ein Zwischenzahnrad auf, das bei Vorliegen in der Antriebsstellung der Förderrollen mit einem Zahnriemen oder einer Antriebskette in Kontakt steht und somit eine Bewegung der Förderrollen bewirkt. Bei Vorliegen der Förderrollen in der Freistellung hingegen liegt kein Kontakt zwischen dem Zwischenzahnrad und dem Zahnriemen oder der Antriebskette vor. Das Zwischenzahnrad ist in der Freistellung von dem Zahnriemen oder der Antriebskette beabstandet. Die Überführung zwischen den beiden Stellungen erfolgt mittels eines als mechanisches Übertragungselement wirkenden Fühlers, der in die Bahn hineinragt, sodass die Überführung durch das zu transportierende Stückgut ausgelöst wird. Das heißt, wenn ein Stückgut den Fühler überfährt und der Fühler anschließend wieder freikommt, wird der Radträger in dem nachfolgenden Staurollenbahnabschnitt derart verschwenkt, dass die Tragrollen von der Freilaufstellung in die Antriebsstellung überführt werden.

Bei der Staurollenbahn gemäß der DE 26 50 205 A1 ist vorgesehen, dass die Antriebskette ständig im Eingriff mit einem Kettenrad ist, wobei das Kettenrad von den jeweils an der Staurolle befindlichen Zahnrädern entkoppelt werden kann, wenn ein zu transportierendes Fördergut einen zwischen zwei Rollen befindlichen Fühler überfährt.

Die in der DE 28 53 483 A1 beschriebene Staurollenbahn sieht ebenfalls Fühler vor, mittels dessen die Förderung von Fördergut gestoppt oder weitergeführt werden kann. Hierzu ist vorgesehen, dass jeweils zwei Ritzel je nach Ausgangslage ineinandergreifen, sodass die Förderrollen das Fördergut transportieren, oder in einem Abstand zueinander angeordnet sind, sodass die Förderung des Fördergutes gestoppt ist.

### Aufgabe

Der vorliegenden Erfindung liegt mithin die Aufgabe zu Grunde eine Rollenbahn bereitzustellen, bei der zumindest ein Förderabschnitt bei aufstauendem Fördergut auf einem nachgelagerten Förderabschnitt abschaltbar ist und bei Auflösung des Staus, der zumindest eine abgeschaltete Förderabschnitt wieder einschaltbar ist.

### Lösung

Die zugrunde liegende Aufgabe wird erfindungsgemäß mittels einer Rollenbahn mit den Merkmalen des Anspruchs 1 gelöst. Vorteilhafte Ausgestaltungen ergeben sich aus den zugehörigen Unteransprüchen sowie der Beschreibung.

Die Rollenbahn zum Fördern von Fördergut zeichnet sich durch eine erste Betätigungseinrichtung, die eine erste Vorauslöseeinrichtung und eine erste Auslöseeinrichtung aufweist und mit der die erste Schalteinrichtung betätigbar ist, wobei das mindestens eine Schaltelement der ersten Schalteinrichtung von der Aktivstellung dadurch in die Passivstellung überführbar ist, dass ein Vorauslöseelement der ersten Vorauslöseeinrichtung in eine Vorauslösestellung und ein Auslöseelement der ersten Auslöseeinrichtung in eine Auslösestellung gebracht wird, wobei das Vorauslöseelement der ersten Vorauslöseeinrichtung von einem auf dem zweiten Förderabschnitt stillstehenden Fördergut aktivierbar und das Auslöseelement der ersten Auslöseeinrichtung von einem auf dem ersten Förderabschnitt befindlichen weiteren Fördergut aktivierbar ist, aus.

Die erfindungsgemäße Rollenbahn ist durch eine erste Betätigungseinrichtung, mit der die erste Schalteinrichtung betätigbar ist, gekennzeichnet. Die erste Betätigungseinrichtung weist eine erste Vorauslöseeinrichtung und eine erste Auslöseeinrichtung auf. Weiterhin ist erfindungsgemäß vorgesehen, dass das mindestens eine Schaltelement der ersten Schalteinrichtung von der Aktivstellung dadurch in die Passivstellung überführbar ist, dass ein Vorauslöseelement der ersten Vorauslöseeinrichtung in eine Vorauslösestellung und ein Auslöseelement der ersten Auslöseeinrichtung in eine Auslösestellung gebracht wird. Das Vorauslöseelement der ersten Vorauslöseeinrichtung ist von einem auf dem zweiten Förderabschnitt stillstehenden Fördergut aktivierbar und das Auslöseelement der ersten Auslöseeinrichtung ist von einem auf dem ersten Förderabschnitt befindlichen weiteren Fördergut aktivierbar.

In Sinne der vorliegenden Anmeldung ist vorgesehen, dass der zweite Förderabschnitt in Förderrichtung betrachtet nach dem ersten Förderabschnitt angeordnet ist. Das heißt, dass ein Fördergut in Förderrichtung zuerst den ersten Förderabschnitt und anschließend den zweiten Förderabschnitt passiert. Der erste und der zweite Förderabschnitt sind benachbart zueinander angeordnet.

Gemäß dieser Anmeldung müssen sowohl das Vorauslöseelement als auch das Auslöseelement der jeweiligen Betätigungseinrichtung aktiviert sein, um die Förderrollen des zugeordneten Förderabschnitts zum Stillstand zu bringen. Zum Beispiel müssen das erste Vorauslöseelement und das erste Auslöseelement aktiviert sein, damit die Förderrollen des ersten Förderabschnitts sich nicht weiterdrehen.

Die erfindungsgemäße Rollenbahn bringt viele Vorteile mit sich. So ist beispielsweise verhinderbar, dass mehrere Fördergüter sich auf einem Förderabschnitt aufstauen. Dies wird deshalb verhindert, weil die Rollenbahn derart ausgestaltet ist, dass das erste Fördergut bei einem Stillstand auf dem zweiten Förderabschnitt das Vorauslöseelement aktiviert. Das zweite Fördergut aktiviert beim Überfahren der Auslöseeinrichtung das Auslöseelement, welches vorzugsweise zwischen dem ersten Förderabschnitt und dem zweiten Förderabschnitt angeordnet ist. Somit sind sowohl das Vorauslöseelement als auch das Auslöseelement aktiviert, wodurch die Schalteinrichtung von ihrer Aktivstellung in ihre Passivstellung überführt ist und folglich der erste Förderabschnitt, auf dem sich das zweite Fördergut befindet, stillsteht. Das zweite Fördergut ist folglich nicht auf den zweiten Förderabschnitt transportierbar. Hierdurch werden Schäden an den jeweiligen Fördergütern oder an der Rollenbahn verhindert. Auch wird vermieden, dass ein Fördergut gegen ein vor diesem auf einem folgenden Förderabschnitt stehendes Fördergut auffährt und dass die Förderrollen, auf denen ersteres Fördergut aufliegt, fortlaufend weiterdrehen und durchrutschen, weil das sich das auf ihnen befindliche Fördergut sich nicht fortbewegen kann.

Der Begriff "diskrete Ladungsträger" bezieht sich gemäß dieser Anmeldung beispielsweise auf Paletten oder Wannen oder andere "Träger", mittels dessen zu förderndes Gut transportiert werden kann. Es ist denkbar, dass zum Beispiel eine Mehrzahl an Getränkekästen auf einem Ladungsträger angeordnet sind, sodass die Mehrzahl der Getränkekästen auf dem Ladungsträger parallel und zeitgleich von der Rollenbahn gefördert werden. Alternativ ist es jedoch auch denkbar, dass das Fördergut selbst von Getränkekisten gebildet wird und unmittelbar auf der Rollenbahn angeordnet ist. Andere Fördergüter, welche für sich allein oder mit den entsprechenden Ladungsträgern transportiert werden können, sind selbstverständlich ebenfalls denkbar.

Im Sinne der vorliegenden Anmeldung sind in dem Maschinengestell sämtliche Komponenten der Rollenbahn integriert, als Beispiel seien hier Förderrollen, Führungselemente, eine Vielzahl von Ritzeln, eine umlaufende Antriebskette und mindestens eine Schalteinrichtung genannt. Die hier genannten Komponenten sind rein exemplarischer Natur. Weitere hier nicht aufgeführte Komponenten sind entsprechend ebenfalls denkbar. Vorzugsweise ist das Maschinengestellt auf einem Untergrund, z.B. einem Hallenboden, angeordnet, vorzugsweise fest mit diesem verbunden.

Mit dem Begriff "Förderrichtung" ist im Sinne der vorliegenden Anmeldung die Richtung zu verstehen, in die ein Fördergut von einem Punkt zu einem nächsten Punkt gefördert wird. Die Förderrichtung ist von der Drehrichtung der Förderrollen abhängig, wobei die Förderrollen sinnvollerweise alle eine gleiche Drehrichtung, beispielweise im Uhrzeigersinn oder gegen den Uhrzeigersinn, aufweisen.

Ein "Förderabschnitt" beschreibt gemäß der vorliegenden Erfindung eine Untereinheit der gesamten Rollenbahn mit einer bestimmten Rollenanzahl pro Förderabschnitt. Eine Länge des Förderabschnitts ist eine Teillänge einer Gesamtlänge der Förderbahn, wobei eine Summe der Längen aller Förderabschnitte gleich der Gesamtlänge der Rollenbahn ist.

Gemäß der vorliegenden Anmeldung bilden die nach oben gerichteten Oberflächen der Förderrollen gemeinsam eine Rollenebene aus, die eine Förderebene definiert. Die "nach oben gerichteten Oberflächen" sind im Sinne der vorliegenden Anmeldung von einer Linie einer Mantelfläche einer jeden Förderrolle gebildet, wobei die Linien der jeweiligen Förderrollen gemeinsam die Rollenebene bilden.

Die "Förderebene" ist im Sinne der vorliegenden Anmeldung die Ebene, auf der die Fördergüter transportiert werden. Das heißt, es ist die Ebene, die in einem unmittelbaren Kontakt mit einer Unterseite der Fördergüter steht.

Die Förderrollen sind annährend horizontal ausgerichtet. Diese "annährend horizontale Ausrichtung" ist im Sinne der vorliegenden Anmeldung so zu verstehen, dass Abweichungen der Achsausrichtung um bis zu 3 Grad ebenfalls abgedeckt sind.

Die Förderrichtung des Fördergutes ist von der Drehrichtung der Förderrollen abhängig, wobei die Förderrollen sinnvollerweise alle eine gleiche Drehrichtung, beispielweise im Uhrzeigersinn oder gegen den Uhrzeigersinn, aufweisen.

Eine Länge der nach oben gerichteten Oberflächen der Förderrollen, also eine Breite der Förderebene, entspricht vorzugsweise mindestens einer Länge oder Breite des Fördergutes. Dies bringt den Vorteil mit sich, dass keine exakte Positionierung der Fördergutes auf der Förderebene erforderlich ist.

Der Ritzel sind jeweils koaxial zu einer zugeordneten Förderrolle sowie an deren Stirnseite oder - in axiale Richtung versetzt außerhalb einer vertikalen Projektion der Rollenbahn - neben deren Stirnseite sowie vorzugsweise außerhalb eines von der Rollenbahn definierten Förderquerschnitts angeordnet sind. Das heißt, dass die Ritzel optional als Verlängerung der Drehachsen der jeweiligen Förderrollen unmittelbar neben der Stirnseite angeordnet sein können. Alternativ liegen die Ritzel in einem Abstand zu der Stirnseite auf einer Verlängerung der Drehachse der Förderrolle. Die Lagerung außerhalb der vertikalen Projektion bringt den Vorteil mit sich, dass die Ritzel vor den Fördergütern und umgekehrt geschützt angeordnet sind. Zudem ist die Zugänglichkeit der Ritzel für Wartungszwecke sehr gut. Bei der Anordnung der Ritzel können diese beispielsweise auf einem reduzierten Durchmesser der Förderrolle außerhalb der Förderebene angeordnet sein, sodass zumindest ein Ritzel auf diesen reduzierten Abschnitt schiebbar, z.B. pressgepasst oder mittels Formschluss (Vielzahn, Passfeder, etc.), ist.

Der "Kraftschluss zwischen der Antriebskette und den Förderrollen" gemäß dieser Anmeldung ist so zu verstehen, dass die Antriebskette bei einem eingeschalteten Kraftschluss derart mit den Förderrollen, vorzugsweise über die Ritzel, verbunden ist, dass eine Kraft und damit ein Drehmoment von der Antriebskette auf die Förderrollen übertragbar ist. Vorliegend wird mittels der Antriebskette eine Drehbewegung der Förderrollen bewirkt, wenn ein Kraftschluss vorliegt.

Im Sinne der vorliegenden Anmeldung ist vorgesehen, dass die Antriebskette in der "Eingriffsstellung" mit mehreren Ritzeln in Eingriff ist, so dass mittels der Antriebseinrichtung ein Drehmoment über die Antriebskette in die dem Schaltelement zugeordneten Ritzel einleitbar ist, und somit eine Rotation der dem Schaltelement zugeordneten Förderrollen bewirkt. Weiterhin ist im Sinne der vorliegenden Anmeldung vorgesehen, dass die Antriebskette in der "Freilaufstellung" mit den dem Schaltelement zugeordneten Ritzeln außer Eingriff ist und zu diesen einen lichten Freilaufabstand aufweist. Das heißt, bei Vorliegen des Schaltelements in seiner Aktivstellung befindet sich die Antriebskette in der Eingriffsstellung, sodass die Antriebskette mit mehreren Ritzeln in Eingriff ist und eine Rotation der dem Schaltelement zugeordneten Förderrollen bewirkt und somit das Fördergut transportieren kann. Bei Vorliegen des Schaltelements in seiner Passivstellung befindet sich die Antriebskette in der Freilaufstellung, in der die Antriebskette mit dem Schaltelement zugeordneten Ritzeln außer Eingriff ist. Es findet sodann keine Förderung des Fördergutes statt.

Die "Antriebskette" besteht im Sinne der vorliegenden Anmeldung aus einer Vielzahl, in der Regel mehreren Hundert, beweglich ineinandergefügten Gliedern, wobei die Glieder unmittelbar oder mittelbar über Gelenke miteinander verbunden sind. Es sind Ketten sämtlicher Art denkbar.

Im Sinne der vorliegenden Anmeldung ist vorgesehen, dass in einer "Passivstellung" des Schaltelements der Kraftschluss zwischen der Antriebskette und den Förderrollen ausgeschaltet ist. Im Gegensatz dazu ist im Sinne der vorliegenden Anmeldung vorgesehen, dass in der "Aktivstellung" des Schaltelements der Kraftschluss zwischen der Antriebskette und der Förderrolle eingeschaltet ist.

Erfindungsgemäß ist es denkbar, dass die Förderrollen eines nachgelagerten Förderabschnitts beispielsweise drehangetrieben werden und die Förderrollen des vorgelagerten Förderabschnitts stillstehen. Dies ist insbesondere deshalb umsetzbar, weil vorzugsweise zumindest die Schaltelemente unterschiedlicher Förderabschnitte einzeln von ihrer Passivstellung in ihre Aktivstellung und umgekehrt überführbar sind. Vorteilhafterweise sind die Schaltelemente in jeweils einem Förderabschnitt alle stets in der gleichen Stellung angeordnet, d.h. synchronisiert, so dass stets zeitgleich ein Umschalten von der einen in die andere Schaltstellung erfolgt.

Die Erfindung weiter ausgestaltet sind vorzugsweise zumindest zwei Führungselemente vorgesehen, die verhindern, dass das Fördergut von einem Verlassen der Rollenbahn in eine Richtung quer zu der Förderrichtung abgehalten wird. Der Begriff "quer" ist so zu verstehen, dass sämtliche Bewegungsrichtungen, die zu einem ungewollten Verlassen des Fördergutes von dem Förderband, mit abgedeckt sind. Es soll entsprechend verhindert werden, dass das Fördergut unbeabsichtigt von der Förderebene herunterrutscht oder -fällt.

Eine weitere vorteilhafte Ausgestaltung der Erfindung sieht vor, dass in Förderrichtung betrachtet, die jeweilige Vorauslöseeinrichtung die Auslöseeinrichtung der jeweils vorhergehenden Betätigungseinrichtung ist. Das heißt, indem das Auslöseelement der ersten Auslöseeinrichtung in seine Auslösestellung überführt wird, wird das Vorauslöseelement der zweiten Vorauslöseeinrichtung ebenfalls in seine Vorauslösestellung überführt, um einen Schaltvorgang auszulösen. Befindet sich also das Auslöseelement der ersten Auslöseeinrichtung in seiner Auslösestellung, befindet sich das Vorauslöseelement der zweiten Vorauslöseeinrichtung gleichzeitig in seiner Vorauslösestellung. Dies bringt den Vorteil mit sich, dass ein Fördergut sowohl das Auslöseelement einer Betätigungseinrichtung als auch das Vorauslöseelement dieser vorgelagerten, zweiten Betätigungseinrichtung zeitgleich aktivieren kann. Die Vorauslöseeinrichtung der ersten Betätigungseinrichtung und die Auslöseeinrichtung der zweiten Betätigungseinrichtung sind somit vorzugsweise das gleiche Bauteil, es kann somit auf weitere Komponenten verzichtet werden. Dies vereinfacht die Wartung und minimiert die Fehleranfälligkeit.

Eine vorteilhafte Weiterentwicklung der erfindungsgemäßen Rollenbahn sieht vor, dass mindestens ein Teil der Betätigungseinrichtung in ihrer Ausgangsstellung zumindest teilweise über die Förderebene hinausragt und in der Vorauslösestellung des Vorauslöseelements und/oder der Auslösestellung des Auslöseelements in oder unterhalb, vorzugsweise zwischen zwei benachbarten Förderrollen, der Förderebene angeordnet ist. Ein über die Förderebene Hinausragen des mindestens einen Teils der Betätigungseinrichtung bewirkt, dass das Fördergut selbst, und zwar vorzugsweise durch Wirkung ihrer Gewichtskraft, die Betätigungseinrichtung auslösen kann. Das Fördergut kommt bei einem Überfahren des Teils der Betätigungseinrichtung in einen unmittelbaren Kontakt mit diesem, wobei eine Kraftübertragung von dem Fördergut auf die Betätigungseinrichtung, insbesondere des Vorauslöseelement und/oder dessen Auslöseelement, stattfindet. Es sind somit keine weiteren zwischengeschalteten Komponenten vorhanden, was wiederum die Fehleranfälligkeit minimiert.

Vorzugsweise ragen das Vorauslöseelement und/oder das Auslöseelement in der Ausgangsstellung der Betätigungseinrichtung zumindest teilweise (und insbesondere nach oben) über die Förderebene hinaus, wobei das Vorauslöseelement vorzugsweise zwischen dem nachgelagerten Förderabschnitt und dem vorgelagerten Förderabschnitt und/oder das Auslöseelement zwischen dem vorgelagerten Förderabschnitt und einem noch weiter vorgelagerten Förderabschnitt angeordnet ist.

Ist die Betätigungseinrichtung einmal ausgelöst, sprich befindet sich das Vorauslöseelement in seiner Vorauslösestellung und das Auslöseelement in der Auslöseeinstellung, ist es nicht mehr notwendig und typischerweise auch nicht mehr der Fall, dass die Betätigungseinrichtung zumindest teilweise oberhalb der Förderebene angeordnet ist. Vielmehr ist es sogar sinnvoll, dass die Betätigungseinrichtung in oder unterhalb der Förderebene angeordnet ist. Das (Vor-)Auslöseelement kann aufgrund seiner Lagerung (Beweglichkeit in vertikale Richtung) ein Fördergut niemals aufhalten, sondern taucht bei Kontakt immer "weg" und bei Weiterbewegung des Förderguts wieder auf. Die Anordnung im Förderquerschnitt ermöglicht die Funktion als (rein) "mechanischer Sensor" mit Verdrängungsfunktion.

Eine konstruktive Weiterentwicklung der Erfindung sieht vor, dass die Betätigungseinrichtung eine Schaltrolle umfasst, die vorzugsweise eine Spannscheibe und/oder einen Spannhebel und/oder eine Rückstelleinrichtung aufweist, wobei vorzugsweise der Spannhebel und/oder die Spannscheibe exzentrisch in dem Maschinengestell gelagert sind.

Im Sinne der vorliegenden Anmeldung beschreibt eine "exzentrische" Lagerung des Spannhebels und/oder der Spannscheibe in dem Maschinengestell, dass eine Drehachse des Spannhebels nicht in einem Mittelpunkt des Spannhebels und/oder eine Drehachse der Spannscheibe nicht in einem Mittelpunkt der Spanscheibe liegen. Eine derartige Bauweise hat sich besonders vorteilhaft erwiesen.

Ferner ist es von Vorteil, wenn die Rückstelleinrichtung, dazu vorgesehen und eingerichtet ist, die Betätigungseinrichtung nach dem Überfahren durch das Fördergut in ihre Ausgangsstellung zurück zu überführen. Es ist sinnvoll, wenn die Betätigungseinrichtung nach dem Überfahren des Fördergutes neu aktiviert, also zurück in ihre Ausgangsstellung überführbar ist, sodass diese bei einem Überfahren durch ein weiteren Fördergutes erneut auslösbar ist. Der Vorgang des Ab- und Wiedereinschaltens der Betätigungseinrichtung ist folglich automatisch wiederholbar zu machen.

Eine weitere vorteilhafte Ausgestaltung der Erfindung sieht vor, dass das Schaltelement eine Schaltnocke ist, wobei vorzugsweise die zumindest eine Schaltnocke derart exzentrisch und um eine Schwenkachse verschwenkbar in dem Maschinengestell gelagert ist, dass ein Wechsel zwischen der Aktivstellung und der Passivstellung durch eine Verschwenkung der Schaltnocke erfolgt. Eine Drehachse des Schaltelements befindet sich folglich nicht im Mittelpunkt der Schaltnocke.

Eine derartige Lagerung des Schaltelements bringt den Vorteil mit sich, dass ein radialer Abstand zwischen einer mit der Antriebskette in Kontakt tretenden Kontaktfläche der Schaltnocke und der Schwenkachse veränderbar ist, wodurch ein Abstand zwischen der Kontaktfläche und der Drehachse der zugeordneten Förderrolle veränderbar ist. Folglich führt eine bloße Verschwenkung der Schaltnocke bereits zu einer radialen Abstandsänderung zwischen der Kontaktfläche der Antriebskette und der Drehachse der zugeordneten Förderrolle.

Es ist denkbar, dass jeweils eine Schaltnocke mehreren Ritzeln oder alternativ jeder Schaltnocke jeweils ein Ritzel zugeordnet ist.

Erfindungsgemäß ist vorgesehen, dass jeweils mehrere Schaltelemente mittels einer Kopplungseinrichtung miteinander gekoppelt sind, die von einer ersten Schaltstellung, in der sich die jeweils gekoppelten Schaltelemente in der Aktivstellung befinden, in eine zweite Schaltstellung überführbar ist, in der sich die jeweils gekoppelten Schaltelemente in der Passivstellung befinden. Die Schaltelemente werden mittels der Kopplungseinrichtung parallel geschaltet und synchronisiert. Eine Kopplung mehrerer Schaltelemente bringt den Vorteil mit sich, dass größere Abschnitte der Antriebskette durch Betätigung einer einzigen Kopplungseinrichtung zeitgleich von ihrer Eingriffsstellung ihre Freilaufstellung und in umgekehrte Richtung überführt werden können. Die Betätigung der Schaltelemente wird somit vereinfacht und das gleichzeitige Ein- und Ausschalten des Kraftschlusses zwischen der Antriebskette und den Förderrollen eines jeweiligen Förderabschnitts kann somit zuverlässiger erfolgen. Vorteilhafterweise ist die Förderbahn in mehrere Förderabschnitte unterteilt, wobei jedem Förderabschnitt eine derartige Kopplungseinrichtung zugeordnet ist. Die jeweiligen Kopplungseinrichtungen können vorteilhafterweise unabhängig voneinander betätigt werden.

Es hat sich herausgestellt, dass eine Kopplungseinrichtung in Form einer Schaltleiste besonders vorteilhaft ist.

Um den Ablauf des Schaltens weiter zu optimieren, sieht eine weitere erfindungsgemäße Ausgestaltung vor, dass die Kopplungseinrichtung die jeweils gekoppelten Schaltelemente rotatorisch und/oder translatorisch beweglich verbindet, wobei vorzugsweise die Kopplungseinrichtung in eine Richtung parallel zu der Förderrichtung bewegbar ist. Das heißt, dass bei der Überführung der Kopplungseinrichtung von ihrer ersten Stellung in ihre zweite Stellung und umgekehrt diese in eine horizontale, parallel zu der Förderrichtung Richtung verschiebbar ist.

Es hat sich als besonders vorteilhaft herausgestellt, wenn eine translatorische Bewegung der Kopplungseinrichtung eine rotatorische Bewegung der ihr zugeordneten Schaltelemente bewirkt. Die der Kopplungseinrichtung zugeordneten Schaltelemente bewegen sich bzw. drehen alle in die gleiche Richtung und synchron und bewirken entsprechend bei dem ihnen zugeordneten Förderabschnitt eine Überführung der Antriebskette von ihrer Eingriffsstellung in ihre Freilaufstellung oder umgekehrt.

Ferner ist es von Vorteil, wenn die Betätigungseinrichtung ein Zugmittel, vorzugsweise in Form einer Schaltkette, umfasst, wobei vorzugsweise ein erstes Ende des Zugmittels mit der Betätigungseinrichtung und ein zweites, dem ersten gegenüberliegende Ende des Zugmittels mit der Kopplungseinrichtung verbunden ist. Vorteilhafterweise ist das zweite Ende des Zugmittels mit der Kopplungseinrichtung, die dem ersten Förderabschnitt zugeordnet ist, und das erste Ende mit der Vorauslöseeinrichtung, die dem nachgelagerten, zweiten Förderabschnitt zugeordnet ist, verbunden. Das heißt, dass das Zugmittel der ersten Betätigungseinrichtung sich von der ersten Vorauslöseeinrichtung bis zu der Kopplungseinrichtung des ersten Förderabschnitts erstreckt. Hierbei umläuft das Zugmittel die Auslöseeinrichtung der ersten Betätigungseinrichtung beziehungsweise die Vorauslöseeinrichtung der zweiten Betätigungseinrichtung.

Das Zugmittel ist derart ausgelegt, dass es bei Vorliegen der ersten Betätigungseinrichtung in seiner Ausgangsstellung in seinem Ruhezustand angeordnet ist. Die Auslösung der Betätigungseinrichtung ausgehend von ihrer Ausgangsstellung läuft wie folgt ab: Wird das Vorauslöseelement der ersten Betätigungseinrichtung durch einen Stopp eines ersten Förderguts über erstgenanntem in seine Vorauslösestellung überführt, wird das Zugmittel vorgespannt, sodass sich dieses in einem Zwischenzustand befindet. Wird nunmehr auch noch das Auslöseelement der ersten Betätigungseinrichtung durch einen Stopp eines zweiten Förderguts über wiederum erstgenanntem in seine Auslösestellung überführt, wird das Zugmittel vollständig gespannt und nimmt dadurch seinen Schaltzustand ein. Bei einer Überführung in seinem Schaltzustand zieht es an der Kopplungseinrichtung die dem ersten Förderabschnitt zugeordnet ist, sodass diese von ihrer ersten Schaltstellung in ihre zweite Schaltstellung überführt wird.

Verfahrensmäßig wird die vorliegende Erfindung durch folgende Schritte gelöst:
- Das Fördergut wird in Förderrichtung auf der Rollenbahn transportiert, wobei das Fördergut in zeitlicher Abfolge zumindest zwei benachbarte Förderabschnitte passiert,
- Ein auf dem - in Förderrichtung betrachtet - nachgelagerten, zweiten Förderabschnitt befindliches, stillstehendes Fördergut aktiviert das Vorauslöseelement der Vorauslöseeinrichtung der ersten Betätigungseinrichtung, sodass das Vorauslöseelement in seine Vorauslösestellung überführt wird,
- Ein auf dem in Förderrichtung betrachtet vorgelagerten, ersten Förderabschnitt befindliches, stillstehendes Fördergut aktiviert das Auslöseelement der Auslöseeinrichtung der ersten Betätigungseinrichtung, so dass dieses Auslöseelement in seine Auslösestellung überführt wird,
- Das Schaltelement wird sodann von seiner Aktivstellung in seine Passivstellung überführt.
- In der Passivstellung des Schaltelements wird der Kraftschluss zwischen der Antriebskette und den Förderrollen des ersten Förderabschnitts ausgeschaltet, sodass die Förderrollen bei diesem ersten Förderabschnitt zum Stillstand kommen.

Hieraus ergeben sich die bereits zuvor aufgeführten Vorteile. Insgesamt lässt sich somit sagen, dass mittels des erfindungsgemäßen Verfahrens eine zuverlässige Förderung von Fördergut ermöglicht wird. Ebenfalls kann mittels des erfindungsgemäßen Verfahrens ein Stillstand des Förderguts auf der Rollenbahn bewirkt werden, wenn aus irgendeinem Grund ein Weitertransport des Fördergutes auf der Rollenbahn nicht möglich ist. Denkbar wäre hier beispielsweise ein Defekt der Rollenbahn, oder dass ein Weitertransport des Förderguts von der Rollenbahn zu einem weiteren Fördermittel nicht möglich ist. Insbesondere die Bewegung der Antriebskette von den Ritzeln weg, bringt den Vorteil mit sich, dass die Förderrollen und Ritzel in ihrer Position verweilen können und somit ein Verschleiß minimiert werden kann. Aufgrund der erfindungsgemäßen Betätigungseinrichtung kann ein kontinuierlicher Wechsel zwischen der Eingriffsstellung und der Freilaufsstellung der Antriebskette je nach vorliegendem Bedarf erfolgen.

Weiterhin sieht eine erfindungsgemäße Ausgestaltung der Erfindung vor, dass die Rollenbahn weiterhin ein Zugmittel der Betätigungseinrichtung umfasst, wobei sich daraus die nachfolgenden Verfahrensschritte ergeben:
- Bei einer Überführung des Vorauslöseelements in seine Vorauslösestellung wird das Zugmittel von seinem Ruhezustand in seinen Zwischenzustand überführt,
- Bei einer Überführung des Auslöseelements in seine Auslösestellung wird das Zugmittel von seinem Zwischenzustand in seinen Schaltzustand überführt,
- Eine Überführung des Zugmittels von seinem Ruhezustand in seinen Schaltzustand bewirkt, dass das Schaltelement von seiner Aktivstellung in seine Passivstellung überführt wird.

Es hat sich herausgestellt, dass sich eine Überführung des Schaltelements von seiner Aktivstellung in seine Passivstellung mittels der Betätigungseinrichtung besonders gut mittels des Zugmittels umsetzen lässt.

### Ausführungsbeispiel

Die Erfindung ist nachstehend anhand eines Ausführungsbeispiels, das in den Figuren dargestellt ist, näher erläutert. Es zeigt:
- Fig. 1a:: Teilansicht einer erfindungsgemäßen Rollenbahn in einer Passivstellung eines Schaltelements in einer vertikalen Projektion,
- Fig. 1b:: Seitenansicht der Teilansicht gemäß Figur 1a,
- Fig. 2a:: Teilansicht der erfindungsgemäßen Rollenbahn gemäß Figur 1a in einer Aktivstellung des Schaltelements in der vertikalen Projektion,
- Fig. 2b:: Seitenansicht der Teilansicht gemäß Figur 2a,
- Fig. 3:: vergrößerte Teilansicht zweier Schalteinrichtungen in der Aktivstellung des Schaltelements,
- Fig. 4:: eine vergrößerte Teilansicht zweier Schalteinrichtungen gemäß Figur 3 in der Passivstellung des Schaltelements,
- Fig. 5a bis 5d:: Seitenansicht der erfindungsgemäßen Rollenbahn bei der Überführung des Schaltelements von seiner Aktivstellung in seine Passivstellung.

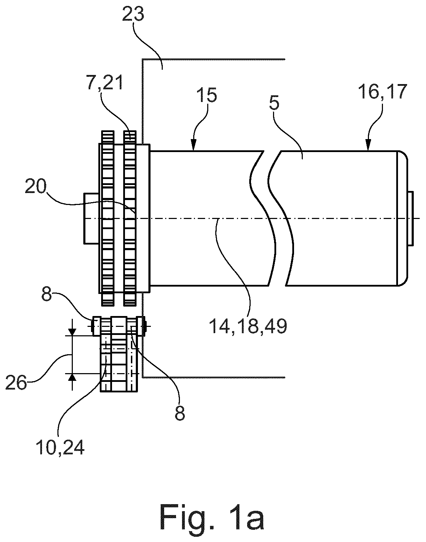

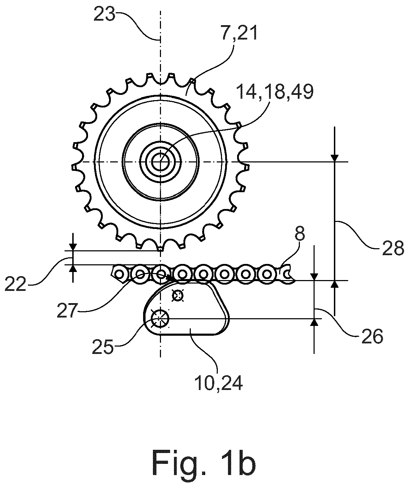

Ein Ausführungsbeispiel, das in den **Figuren 1 bis 5d** dargestellt ist, zeigt eine erfindungsgemäße Rollenbahn **1** zur Förderung von Fördergut **2, 3, 4,** insbesondere in Form von diskreten Ladungsträgern. Die Rollenbahn **1** umfasst ein hier nicht dargestelltes Maschinengestell, eine Vielzahl von Förderrollen **5,** mindestens zwei hier nicht dargestellte Führungselemente, die die Rollenbahn **1** an ihren beiden sich gegenüberliegenden Längsseiten begrenzen. Das Fördergut **2, 3, 4** wird von den Führungselementen von einem Verlassen der Rollenbahn **1** in eine Richtung quer zu einer Förderrichtung **6** abgehalten.

Ferner umfasst die Rollenbahn **1** eine Vielzahl von Ritzeln **7,** eine umlaufende Antriebskette **8,** eine hier nicht dargestellte Antriebseinrichtung zum Antrieb der Antriebskette **8** und mindestens eine Schalteinrichtung **9, 33** mit einem Schaltelement **10.**

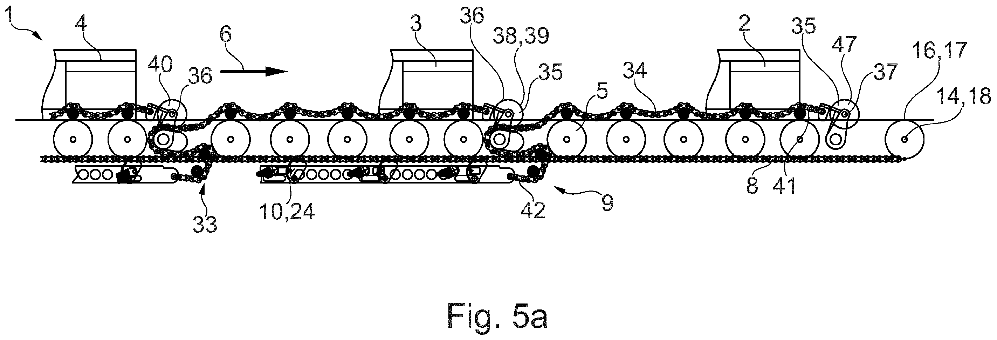

Wie insbesondere den **Figuren 5a bis 5d** entnommen werden kann, ist die nur in einem Teil ihrer gesamten Länge gezeigte Rollenbahn **1** in diesem Ausführungsbeispiel in drei in Förderrichtung **6** betrachtet aneinander angrenzende Förderabschnitte **11, 12, 13** unterteilt, wobei jeder Förderabschnitt **11, 12 ,13** für sich jeweils eine Vielzahl von Förderrollen **5** und eine entsprechende Vielzahl von Ritzeln **7** umfasst. Die beiden Förderabschnitte **11** und **12** umfassen jeweils eine Schalteinrichtung **9, 33.** Der Förderabschnitt **13** weist ebenfalls eine hier nicht dargestellte Schalteinrichtung auf. Nach diesem Förderabschnitt **13** verlässt das Fördergut **2, 3, 4** die Rollenbahn **1.** In anderen hier nicht dargestellten Ausführungsformen sind auch mehr oder weniger Förderabschnitte denkbar.

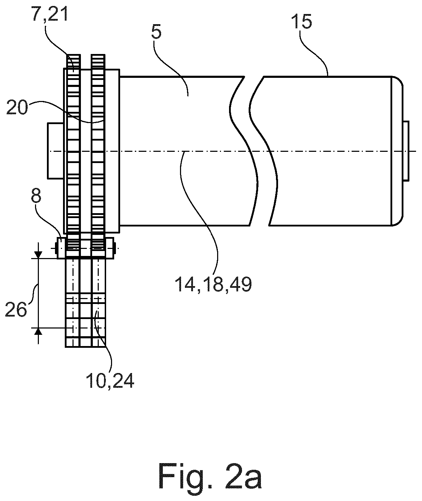

Die **Figuren 1a** **und** **2a** zeigen jeweils eine Teilansicht der Rollenbahn **1** in einer vertikalen Projektion **23.** Die Förderrolle **5,** welche hier als Beispiel für viele nebeneinander angeordnete Förderrollen **5** näher beschrieben wird, ist langgestreckt und zylinderförmig ausgebildet. Mehrere nebeneinander angeordnete Förderrollen **5** sind derart zueinander benachbart angeordnet, dass deren Längsachsen **14** horizontal und parallel zueinander angeordnet sind. Nach oben gerichtete Oberflächen **15** (Linienkontakt) der Förderrollen **5** bilden gemeinsam eine Rollenebene **16,** die eine Förderebene **17** definiert, wie den **Figur 5a bis 5d** entnommen werden kann. Jede Förderrolle **5** weist eine annährend horizontal ausgerichtete Drehachse **18,** die vorzugsweise koaxial zu der jeweiligen Längsachse **14** angeordnet ist, auf, wobei die benachbarten Drehachsen **18** der benachbarten Förderrollen **5** gemeinsam eine Achsebene **19** definieren.

An einer Stirnseite **20** der Förderrolle **5** ist in diesem Ausführungsbeispiel das Ritzel **7** in Form eines Doppelritzels **21** angeordnet, wobei hier und vorzugsweise an jeder Förderrolle **5** stirnseitig ein solches Doppelritzel **21** angeordnet ist. Eine Ritzelachse **49** ist koaxial zu einer Drehachse **18** der Förderrolle **5** angeordnet. Das Ritzel **7** ist koaxial zu der zugeordneten Förderrolle **5** an deren Stirnseite **20** angeordnet. Das Ritzel **7** ist in axiale Richtung versetzt außerhalb der vertikalen Projektion **23** der Rollenebene **16** neben der Stirnseite **20** angeordnet ist. Bei beiden Ausführungsformen ist das Ritzel **7** außerhalb der von der Rollenebene **16** definierten Förderebene **17** angeordnet. Denkbar ist auch, hier allerdings nicht dargestellt, dass jeder Förderrolle nur ein Ritzel zugeordnet ist oder jeder Förderrolle mehrere Ritzel zugeordnet sind. Mehrere Ritzel sind dann vorzugsweise in axiale Richtung nebeneinander versetzt an einer Stirnseite angeordnet.

Die Ritzel **7** werden von der zumindest einen umlaufenden Antriebskette **8,** im vorliegenden Ausführungsbeispiel von zwei umlaufenden Antriebsketten **8** angetrieben, wobei jede Antriebskette **8** einem Ritzel **7** des Doppelritzels **21** zugeordnet ist.

Die erfindungsgemäße Rollenbahn **1** umfasst ferner die Schalteinrichtung **9, 33,** mit der der Kraftschluss zwischen der Antriebskette **8** und den Förderrollen **5** ein- und ausschaltbar ist. Die Schalteinrichtung **9, 33** weist zumindest ein Schaltelement **10** auf, wie den **Figuren 1a bis 2b** zu entnehmen ist.

Das Schaltelement **10** wird in den **Figuren 1a** **und** **1b** in seiner Passivstellung gezeigt, in der der Kraftschluss zwischen der Antriebskette **8** und der Förderrolle **5** ausgeschaltet ist. Die Antriebskette **8** befindet sich in einer Freilaufstellung, in der die Antriebskette **8** in einem Freilaufabstand **22** zu den jeweiligen Ritzeln **7** angeordnet ist. Es findet keine Kraftübertragung von der Antriebseinrichtung auf die Ritzel **7** statt.

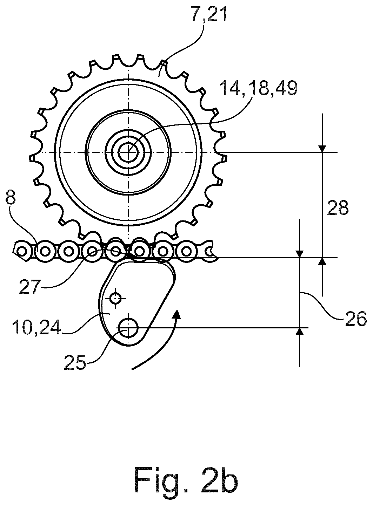

In den **Figuren 2a** **und** **2b** ist das Schaltelement **10** wiederum in seiner Aktivstellung gezeigt, in der der Kraftschluss zwischen der Antriebskette **8** und der Förderrolle **5** vorliegt. Die Antriebskette **8** befindet sich entsprechend in ihrer Eingriffsstellung, in der sie mit mehreren Ritzeln **7** in Eingriff ist. Folglich wird mittels der Antriebseinrichtung ein Drehmoment über die Antriebskette **8** in die dem Schaltelement **10** zugeordneten Ritzel **7** übertragen, sodass eine Rotation der dem Schaltelement **10** zugeordneten Förderrolle **5** bewirkt wird.

Das Schaltelement **10** ist derart eingerichtet, dass es von seiner Passivstellung in seine Aktivstellung und umgekehrt überführt werden kann, wie später noch anhand von **Figuren 5a bis 5b** erläutert wird.

Um die Antriebskette **8** von ihrer Eingriffsstellung in die Freilaufstellung zu überführen, ist vorgesehen, dass die Antriebskette **8** senkrecht zu der durch die Drehachsen **18** der Förderrollen **5** gebildeten Achsebenen **19** von den Ritzeln **7** wegbewegt wird. Ebenso ist bei der Überführung der Eingriffsstellung in die Freilaufstellung vorgesehen, dass die Antriebskette **8** senkrecht zu der durch die Drehachsen **18** der Förderrollen **5** gebildeten Achsebenen **19** zu den Ritzeln **7** hinbewegt wird.

Eine Überführung des Schaltelements **10** von seiner Passivstellung in seine Aktivstellung und umgekehrt erfolgt in diesem Ausführungsbeispiel rotatorisch.

Das Schaltelement **10** in Form einer Schaltnocke **24** ist derart exzentrisch und um eine Schwenkachse **25** verschwenkbar in dem Maschinengestell gelagert, dass ein Wechsel zwischen der Aktivstellung und der Passivstellung durch eine Verschwenkung der Schaltnocke **24** erfolgt. Die Schwenkachse **25** ist hier und vorzugsweise parallel zu den Längsachsen **14** der Förderrollen **5** und entsprechend senkrecht zu Förderrichtung **6** angeordnet. Ein radialer Abstand **26** zwischen einer mit der Antriebskette **8** in Kontakt tretenden Kontaktfläche **27** der Schaltnocke **24** und der Schwenkachse **25** ist veränderbar. Das heißt, dass ein Abstand **28** zwischen der Kontaktfläche **27** zu der der Förderrolle **5** zugeordneten Drehachse **18** veränderbar ist. Entsprechend ändert sich ein Abstand der auf den Schaltnocken **24** liegenden Antriebskette **8** zu den Ritzeln **7** je nach Position der Schaltnocke **24.**

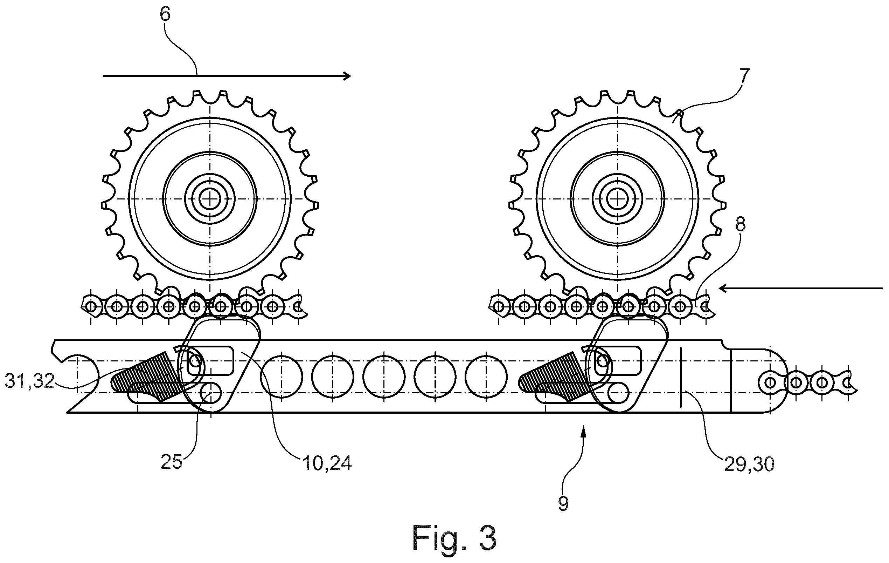

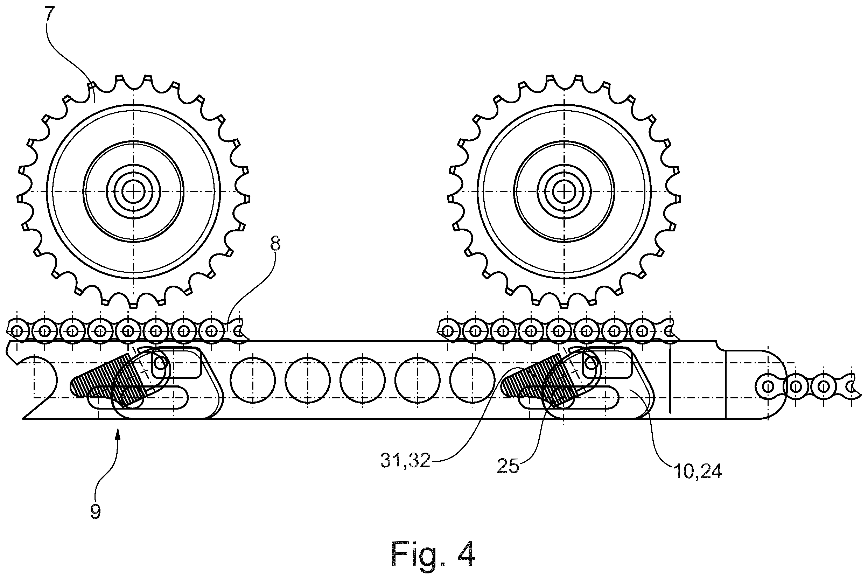

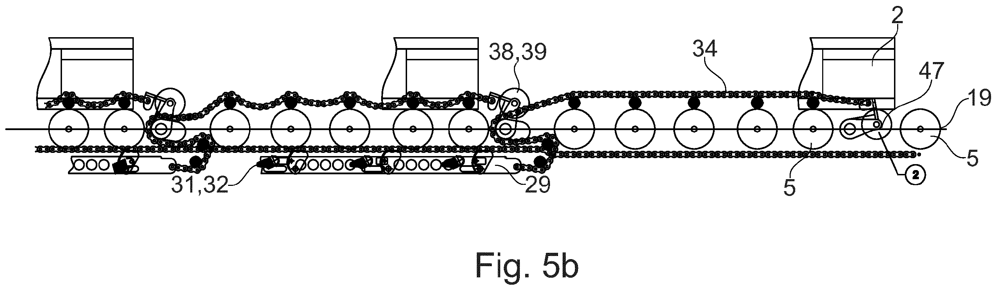

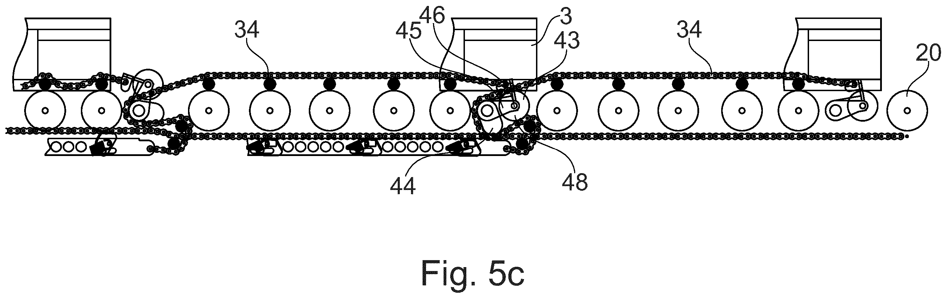

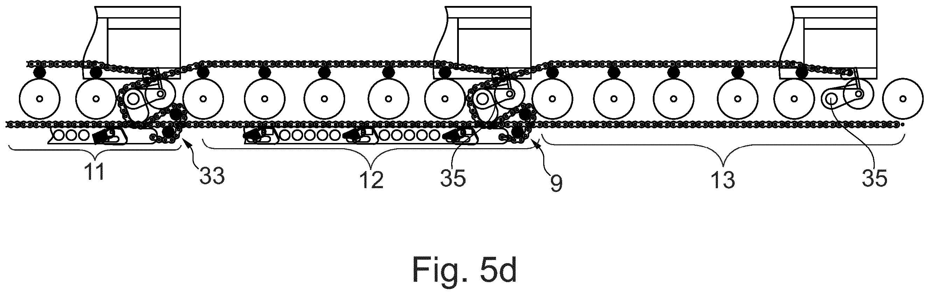

Wie insbesondere den **Figuren 3 bis 5d** entnommen werden kann, sind jeweils mehrere Schaltelemente **10** mittels einer Kopplungseinrichtung **29** miteinander gekoppelt. Die Kopplungseinrichtung **29** kann von einer ersten Schaltstellung, in der sich die jeweils gekoppelten Schaltelemente **10** in der Aktivstellung befinden **(****Figur 3****,** **5a** **und** **5b****),** in eine zweite Schaltstellung überführt werden, in der sich die jeweils gekoppelten Schaltelemente **10** in der Passivstellung befinden **(****Figur 4****, Förderabschnitt 12 in** **Figuren 5c** **und** **5d****).**

Wie den **Figuren 3 bis 5d** zu entnehmen ist, ist die Kopplungseinrichtung **29** in Form einer Schaltleiste **30** ausgeführt. Um nunmehr das Schaltelement **10** von seiner ersten Schaltstellung in seine zweite Schaltstellung und umgekehrt zu überführen, sind die jeweiligen Schaltelemente **10** derart beweglich mit der Kopplungseinrichtung **29** verbunden sind, dass eine translatorische Bewegung der Kopplungseinrichtung **29** eine rotatorische Bewegung der jeweils zugeordneten Schaltelemente **10** bewirkt. Die translatorische Bewegung der Kopplungseinrichtung **29** erfolgt in eine horizontale Richtung parallel zu der Förderrichtung **6.**

Die mit der Antriebskette **8** in Kontakt tretenden Kontaktflächen **27** der Schaltelemente **10** sind je nach Stellung der Kopplungseinrichtung **29** in unterschiedlichen Abständen zu den zugeordneten Ritzeln 7 angeordnet. Aufgrund einer Parallelschaltung der Schaltelemente **10** mittels der Kopplungseinrichtung **29** sind die Abstände zwischen den gleichgeschalteten Kontaktflächen **27** der Schaltelemente **10** und den Ritzeln **7** nahezu identisch.

An dem jeweiligen Schaltelement **10** ist jeweils ein Rückstellelement **31** in Form einer Feder **32** gebildet, angeordnet, wie den **Figuren 3** **und** **4** entnommen werden kann. Bei einer translatorischen Bewegung der Kopplungseinrichtung **29** in Förderrichtung **6** und der damit verbundenen Verschwenkung des Schaltelements **10** wird das Rückstellelement **31** gespannt. Eine Entspannung der Feder **32** bewirkt, dass das zugehörige Schaltelement **10** wieder in seine Aktivstellung überführt und das Schaltelement **10** zurück in seine Ausgangstellung bewegt wird.

Die **Figuren 5a bis 5d** zeigen die erfindungsgemäße Rollenbahn **1** mit mehreren Förderabschnitten **11, 12 ,13.** In diesem Ausführungsbeispiel ist der zweite Förderabschnitt **13** in Förderrichtung **6** betrachtet der letzte dargestellte Förderabschnitt **13.** Der zweite Förderabschnitt **13** ist in Förderrichtung **6** betrachtet dem ersten Förderabschnitt **12** nachgelagert angeordnet und ein "nullter" Förderabschnitt **11** ist wiederum vorgelagert zu dem ersten Förderabschnitt **12** angeordnet. Eine erste Schalteinrichtung **9** ist dem ersten Förderabschnitt **12** und eine zweite Schalteinrichtung **33** ist dem nullten Förderabschnitt **11** zugeordnet.

Jede Schalteinrichtung **9, 33** weist mehrere Schaltelemente **10,** eine Kopplungseinrichtung **29,** ein Zugmittel **34** und eine Betätigungseinrichtung **35, 36** auf. Die Schaltelemente **10** werden jeweils von einer Schaltnocke **24** gebildet, die den zuvor dargelegten Ausführungen zu **Figuren 1a bis 4** entsprechen. Die Kopplungseinrichtung **29** koppelt die Schaltnocken **24** miteinander, sodass eine in Förderrichtung **6** betrachtete translatorische Bewegung der Kopplungseinrichtung **29** eine Überführung der Schaltnocken **24** von ihrer Aktivstellungstellung in ihre Passivstellung bewirkt. Eine translatorische Bewegung der Kopplungseinrichtung **29** entgegen der Förderrichtung **6** führt zu einer Überführung der Schaltnocken **24** von ihrer Passivstellung in ihre Aktivstellung führen, wobei die translatorische Bewegung entgegen der Förderrichtung **6** auch durch die den Schaltelementen **10** zugeordnete Rückstellelemente **31,** in Form von beispielsweise Federn **32,** ausgelöst werden kann, wie beispielsweise den **Figuren 3** **und** **4** zu entnehmen ist. Das Zugmittel **34** wird von einer Schaltkette gebildet.

Die Betätigungseinrichtungen **35, 36** weisen jeweils eine Vorauslöseeinrichtung **37, 38** und jeweils eine Auslöseeinrichtung **39, 40** auf. Eine erste Betätigungseinrichtung **35** umfasst eine erste Vorauslöseeinrichtung **37** und eine erste Auslöseeinrichtung **39,** mit denen gemeinsam die erste Schalteinrichtung **9** betätigbar ist. Die Betätigungseinrichtungen **35, 36** umfassen eine Schaltrolle **43** mit einer Spannscheibe **44** und einem Spannhebel **45,** sowie eine Rückstelleinrichtung **46.** Die Spannscheibe **44** und der Spannhebel **45** sind exzentrisch in dem Maschinengestell gelagert.

Ein erstes Ende **41** des Zugmittels **34** ist mit der ersten Vorauslöseeinrichtung **37** und ein zweites dem ersten gegenüberliegendes Ende **42** des Zugmittels **34** ist mit der Kopplungseinrichtung **29** verbunden. Das Zugmittel **34** umläuft zudem die erste Auslöseeinrichtung **39.**

Die erste Auslöseeinrichtung **39** der ersten, dem ersten Förderabschnitt **12** zugeordneten, Betätigungseinrichtung **35** ist ebenfalls eine zweite Vorauslöseeinrichtung **38,** die der zweiten Betätigungseinrichtung **36** des nullten Förderabschnitts **11** zugeordnet ist.

In der **Figur 5a** werden Fördergüter **2, 3, 4** auf der Förderebene **17** über die Förderrollen **5** in Förderrichtung **6** transportiert. Die Kopplungseinrichtung **29** befindet sich in ihrer ersten Schaltstellung. Die Schaltelemente **10** befinden sich folglich in ihrer Aktivstellung, wodurch zwischen der Antriebskette **8** und den jeweiligen Förderrollen **5** durch Eingriff in die Ritzel **7** ein Kraftschluss gegeben ist. Die Antriebskette **8** befindet sich entsprechend in ihrer Eingriffsstellung. Die erste Betätigungseinrichtung **35** befindet sich wiederum in ihrer Ausgangsstellung, in der das Zugmittel **34** entspannt in seiner Ruhestellung vorliegt und die Vorauslöseeinrichtung **37** und die Auslöseeinrichtung **39** der Betätigungseinrichtung **35** zumindest teilweise über die Förderebene **17** hinausragen.

In der **Figur 5b** überfährt das erste Fördergut **2** ein Vorauslöseelement **47** der ersten Vorauslöseeinrichtung **37,** sodass das Vorauslöseelement **47** aktiviert und in seine Vorauslösestellung überführt wird. Das Vorauslöseelement **47** ist sodann unterhalb der Förderebene **17** zwischen zwei Förderrollen **5** angeordnet. Solange sich das erste Fördergut **2** nicht weiterbewegt, verbleibt das Vorauslöseelement **47** in der abgesenkten Stellung. Das Zugmittel **34** befindet sich dabei in einem Zwischenzustand, in dem das Zugmittel **34** vorgespannt ist, aber noch keinen Zug auf die Kopplungseinrichtung **29** ausübt.

In der **Figur 5c** überfährt das zweite Fördergut **3** ein Auslöseelement **48** der ersten Auslöseeinrichtung **39.** Das Auslöseelement **48** befindet sich sodann in seiner Auslösestellung. Das erste Fördergut **3** steht weiterhin an zuvor beschriebener Stelle, sodass das Zugmittel **34** in seinen Schaltzustand überführt wird. Das Auslöseelement **48** ist nunmehr unterhalb der Förderebene 17 zwischen zwei Förderrollen **5** angeordnet. Gleichzeitig wird die zweite Vorauslöseeinrichtung **38,** die auch der ersten Auslöseeinrichtung **39** entspricht, in ihre Vorauslösestellung überführt. Das Zugmittel **34** der zweiten Betätigungseinrichtung **36** wird in seinen Zwischenzustand überführt.

Befindet sich das Vorauslöseelement **47** in seiner Vorauslösestellung und das Auslöseelement **48** in der Auslösestellung, wird, wie zuvor beschrieben, das Zugmittel **34** derart gespannt, dass die Kopplungseinrichtung **29** in ihre zweite Schaltstellung überführt wird. Das Zugmittel **34** befindet sich sodann in seinem Schaltzustand. Das Zugmittel **34** bewegt die Kopplungseinrichtung **29** translatorisch in Förderrichtung **6.** Dies bewirkt, dass die Schaltelemente **10** derart exzentrisch in dem Maschinengestellt geschwenkt werden, dass die jeweiligen Kontaktflächen **27** der Schaltelemente **10** einen größeren Abstand **28** zu der Drehachse **18** der zugehörigen Förderrollen **5** einnehmen, wodurch sich der Freilaufabstand **22** zwischen der Antriebskette **8** und den Ritzeln **7** auftut. Die Antriebskette **8** befindet sich nun in Bezug auf den ersten Förderabschnitt **12** in ihrer Freilaufstellung. Das auf diesem ersten Förderabschnitt **12** befindliche Fördergut **3** kommt zum Stillstand, da die zugeordneten Förderrollen **5** ausgekoppelt sind.

Die **Figur 5d** zeigt, dass die zweite Schalteinrichtung **33** genau wie die erste Schalteinrichtung **9** durch ein drittes Fördergut **4** ausgelöst wird, sodass die Antriebskette **8** an dem nullten Förderabschnitt **11** von ihrer Eingriffsstellung in ihre Freilaufstellung überführt wird, und das Fördergut **4** auf diesem Förderabschnitt **11** ebenfalls zum Stillstand kommen.

Bei einer Überführung der Antriebskette **8** in dem ersten Förderabschnitt **12** von ihrer Freilaufstellung in ihre Eingriffsstellung wird das erste Fördergut **2** von der ersten Vorauslöseeinrichtung **37** wegbewegt. Über die Rückstelleinrichtung **46,** beispielsweise in Form eine Rückstellfeder, wird die Betätigungseinrichtung **35** in ihre Ausgangsstellung zurückbewegt. Dies hat wiederum zur Folge, dass sich das Zugmittel **34** entspannt. Die an den jeweiligen Schaltelementen **10** befindlichen Rückstellelemente **31** in Form von Federn **32** ziehen die Schaltelemente **10** in ihre Aktivstellung. Die Kopplungseinrichtung **29** wird dadurch in eine Richtung entgegen der Förderrichtung **6** in seine erste Schaltstellung bewegt. Der Freilaufabstand **22** zwischen der Antriebskette **8** und den Ritzeln **7** wird überwunden und es findet eine Kraftübertragung von der Antriebskette **8** auf die Förderrollen **5** statt. Das zweite Fördergut **3** verlässt nunmehr die erste Auslöseeinrichtung **39,** wodurch das Zugmittel **34** der zweiten Betätigungseinrichtung **36** ebenfalls entspannt und somit, wie bereits zum der ersten Betätigungseinrichtung **35** beschrieben, die Antriebskette **8** in dem nullten Förderabschnitt **11** ebenfalls in ihre Eingriffsstellung überführt wird.

### Bezugszeichenliste

- 1: Rollenbahn
- 2: Fördergut
- 3: Fördergut
- 4: Fördergut
- 5: Förderrollen
- 6: Förderrichtung
- 7: Ritzel
- 8: Antriebskette
- 9: Schalteinrichtung
- 10: Schaltelement
- 11: Förderabschnitt
- 12: Förderabschnitt
- 13: Förderabschnitt
- 14: Längsachsen
- 15: Oberflächen
- 16: Rollenebene
- 17: Förderebene
- 18: Drehachse
- 19: Achsebene
- 20: Stirnseite
- 21: Doppelritzel
- 22: Freilaufabstand
- 23: Vertikale Projektion
- 24: Schaltnocke
- 25: Schwenkachse
- 26: Radialer Abstand
- 27: Kontaktfläche
- 28: Abstand
- 29: Kopplungseinrichtung
- 30: Schaltleiste
- 31: Rückstellelement
- 32: Feder
- 33: Schalteinrichtung
- 34: Zugmittel
- 35: Betätigungseinrichtung
- 36: Betätigungseinrichtung
- 37: Vorauslöseeinrichtung
- 38: Vorauslöseeinrichtung
- 39: Auslöseeinrichtung
- 40: Auslöseeinrichtung
- 41: Ende
- 42: Ende
- 43: Schaltrolle
- 44: Spannscheibe
- 45: Spannhebel
- 46: Rückstelleinrichtung
- 47: Vorauslöseelement
- 48: Auslöseelement
- 49: Ritzelachse

## Patentansprüche

1. Rollenbahn (1) zum Fördern von Fördergut (2, 3, 4), insbesondere in Form von diskreten Ladungsträgern, umfassend
- ein Maschinengestell,
- zumindest eine umlaufende Antriebskette (8),
- zumindest eine Antriebseinrichtung zum Antrieb der Antriebskette (8),
- zumindest zwei in eine Förderrichtung (6) aneinander angrenzende Förderabschnitte (11, 12, 13), die jeweils umfassen:
eine Vielzahl von antreibbaren, zylinderförmigen Förderrollen (5), deren jeweiligen nach oben gerichteten Oberflächen (15) gemeinsam eine Rollenebene (16) bilden, die eine Förderebene (17) definiert, und wobei jede Förderrolle (5) eine Drehachse (18) aufweist, und benachbarte Drehachsen (18) gemeinsam eine Achsebene (19) definieren,
eine Vielzahl von Ritzeln (7), die jeweils koaxial zu einer zugeordneten Förderrolle (5) sowie an deren Stirnseite (20) oder - in axiale Richtung versetzt außerhalb einer vertikalen Projektion (23) der Rollenbahn (1) - neben deren Stirnseite (20) sowie eines von der Rollenbahn (1) definierten Förderquerschnitts angeordnet sind,
mindestens eine Schalteinrichtung (9), mit der jeweils ein Kraftschluss zwischen der Antriebskette (8) und den Förderrollen (5) jeweils eines Förderabschnitts (11, 12, 13) ein- und ausschaltbar ist und die jeweils mindestens ein Schaltelement (10) aufweisen, das dazu eingerichtet ist, von einer Passivstellung in eine Aktivstellung und umgekehrt überführt zu werden,
wobei eine erste Schalteinrichtung (9) einem ersten Förderabschnitt (12) und eine zweite Schalteinrichtung (33) einem nullten Förderabschnitt (11) zugeordnet ist,
**gekennzeichnet durch** eine erste Betätigungseinrichtung (35), die eine erste Vorauslöseeinrichtung (37) und eine erste Auslöseeinrichtung (39) aufweist und mit der die erste Schalteinrichtung (9) betätigbar ist, wobei das mindestens eine Schaltelement (10) der ersten Schalteinrichtung (9) von der Aktivstellung dadurch in die Passivstellung überführbar ist, dass ein Vorauslöseelement (47) der ersten Vorauslöseeinrichtung (37) in eine Vorauslösestellung und ein Auslöseelement (48) der ersten Auslöseeinrichtung (39) in eine Auslösestellung gebracht wird, wobei das Vorauslöseelement (47) der ersten Vorauslöseeinrichtung (37) von einem auf dem zweiten Förderabschnitt (13) stillstehenden Fördergut (2) aktivierbar und das Auslöseelement (48) der ersten Auslöseeinrichtung (39) von einem auf dem ersten Förderabschnitt (12) befindlichen weiteren Fördergut (3) aktivierbar ist.

2. Rollenbahn (1) nach Anspruch 1, **gekennzeichnet durch** zumindest zwei Führungselemente, die die Förderebene (17) an ihren beiden sich gegenüberliegenden Längsseiten begrenzen und somit das Fördergut (2, 3, 4) von einem Verlassen der Rollenbahn (1) in eine Richtung quer zu der Förderrichtung (6) abhalten.

3. Rollenbahn (1) nach Anspruch 1 oder 2, **dadurch gekennzeichnet, dass** in Förderrichtung (6) betrachtet, die jeweilige Vorauslöseeinrichtung (38) die Auslöseeinrichtung (39) der jeweils vorhergehenden Betätigungseinrichtung (35, 36) ist.

4. Rollenbahn (1) nach einem der vorherigen Ansprüche, **dadurch gekennzeichnet, dass** die Betätigungseinrichtung (35, 36) eine Schaltrolle (43) umfasst.

5. Rollenbahn (1) nach Anspruch 4, **dadurch gekennzeichnet, dass** die Schaltrolle (43) eine Spannscheibe (44) und/oder einen Spannhebel (45) und/oder eine Rückstelleinrichtung (46) aufweist, wobei vorzugsweise der Spannhebel (45) und/oder die Spannscheibe (44) exzentrisch in dem Maschinengestell gelagert sind.

6. Rollenbahn (1) nach einem der vorherigen Ansprüche, **dadurch gekennzeichnet, dass** die Rückstelleinrichtung (46), dazu eingerichtet ist, die Betätigungseinrichtung (35, 36) nach dem Überfahren durch das Fördergut (2, 3, 4) in ihre Ausgangsstellung zurück zu überführen.

7. Rollenbahn (1) nach einem der vorherigen Ansprüche, **dadurch gekennzeichnet, dass** mindestens ein Teil der Betätigungseinrichtung (35, 36) in ihrer Ausgangsstellung zumindest teilweise über die Förderebene (17) hinausragt und in der Vorauslösestellung des Vorauslöseelements (47) und/oder der Auslösestellung des Auslöseelements (48) in oder unterhalb, vorzugsweise zwischen zwei benachbarten Förderrollen (5), der Förderebene (17) angeordnet ist.

8. Rollenbahn (1) nach einem der vorherigen Ansprüche, **dadurch gekennzeichnet, dass** das Schaltelement (10) eine Schaltnocke (24) ist, wobei vorzugsweise die zumindest eine Schaltnocke (24) derart exzentrisch und um eine Schwenkachse (25) verschwenkbar in dem Maschinengestell gelagert ist, dass ein Wechsel zwischen der Aktivstellung und der Passivstellung durch eine Verschwenkung der Schaltnocke (24) erfolgt, wobei ein radialer Abstand (26) zwischen einer mit der Antriebskette (8) in Kontakt tretenden Kontaktfläche (27) der Schaltnocke (24) und der Schwenkachse (25) veränderbar ist, wodurch ein Abstand (28) zwischen der Kontaktfläche (27) und der Drehachse (18) der zugeordneten Förderrolle (5) veränderbar ist.

9. Rollenbahn (1) nach einem der vorherigen Ansprüche, **dadurch gekennzeichnet, dass** jeweils mehrere Schaltelemente (10) mittels einer Kopplungseinrichtung , vorzugsweise in Form einer Schaltleiste (30), gekoppelt sind, die von einer ersten Schaltstellung, in der sich die jeweils gekoppelten Schaltelemente (10) in der Aktivstellung befinden, in eine zweite Schaltstellung überführbar ist, in der sich die jeweils gekoppelten Schaltelemente (10) in der Passivstellung befinden.

10. Rollenbahn (1) nach Anspruch 9, **dadurch gekennzeichnet, dass** die Kopplungseinrichtung (29) die jeweils gekoppelten Schaltelemente (10) rotatorisch und/oder translatorisch beweglich verbindet, wobei die Kopplungseinrichtung (29) in eine Richtung parallel zu der Förderrichtung (6) bewegbar ist.

11. Rollenbahn (1) nach einem der vorherigen Ansprüche, **dadurch gekennzeichnet, dass** die Betätigungseinrichtung (35, 36) ein Zugmittel (34), vorzugsweise in Form einer Schaltkette, umfasst, wobei vorzugsweise ein erstes Ende des Zugmittels (41) mit der Betätigungseinrichtung (35) und ein zweites, dem ersten gegenüberliegende Ende (42) des Zugmittels (34) mit der Kopplungseinrichtung (29) verbunden ist.

12. Verfahren zum Betrieb einer Rollenbahn (1) zum Fördern von Fördergut (2, 3, 4), insbesondere in Form von diskreten Ladungsträgern, nach einem der vorhergehenden Ansprüche 1 bis 11, umfassend
- ein Maschinengestell,
- zumindest eine umlaufende Antriebskette (8),
- zumindest eine Antriebseinrichtung zum Antrieb der Antriebskette (8),
- zumindest zwei in eine Förderrichtung (6) aneinander angrenzende Förderabschnitte (11, 12, 13), die jeweils umfassen:
eine Vielzahl von antreibbaren, vorzugsweise langgestreckten, zylinderförmigen Förderrollen (5), deren jeweiligen nach oben gerichteten Oberflächen (15) gemeinsam eine Rollenebene (16) bilden, die eine Förderebene (17) definiert, und wobei jede Förderrolle (5) eine Drehachse (18) aufweist, und benachbarte Drehachsen (18) gemeinsam eine Achsebene (19) definieren,
zumindest zwei Führungselemente, die die Rollenebene (16) an ihren beiden sich gegenüberliegenden Längsseiten begrenzen und somit das Fördergut (2, 3, 4) von einem Verlassen der Rollenbahn (1) in eine Richtung quer zu der Förderrichtung (6) abhalten,
eine Vielzahl von Ritzeln (7), die jeweils koaxial zu einer zugeordneten Förderrolle (5) sowie an deren Stirnseite (20) oder - in axiale Richtung versetzt außerhalb einer vertikalen Projektion (23) der Rollenbahn (1) - neben deren Stirnseite (20) sowie eines von der Rollenbahn (1) definierten Förderquerschnitts angeordnet sind,
mindestens zwei Schalteinrichtungen (9), mit denen jeweils ein Kraftschluss zwischen der Antriebskette (8) und den Förderrollen (5) jeweils eines Förderabschnitts (11, 12, 13) ein- und ausschaltbar ist und die jeweils mindestens ein Schaltelement (10) aufweisen, das dazu vorgesehen und eingerichtet ist, von einer Passivstellung in eine Aktivstellung und umgekehrt überführt zu werden, wobei eine erste Schalteinrichtung (9) einem ersten Förderabschnitt (12) und eine zweite Schalteinrichtung (33) einem nullten Förderabschnitt (11) zugeordnet ist,
eine erste Betätigungseinrichtung (35), die eine erste Vorauslöseeinrichtung (37) und eine erste Auslöseeinrichtung (39) aufweist und mit der die erste Schalteinrichtung (9) betätigbar ist, wobei das mindestens eine Schaltelement (10) der ersten Schalteinrichtung (9) von der Aktivstellung dadurch in die Passivstellung überführbar ist, dass ein Vorauslöseelement (47) der ersten Vorauslöseeinrichtung (37) in eine Vorauslösestellung und ein Auslöseelement (48) der ersten Auslöseeinrichtung (39) in eine Auslösestellung gebracht wird, wobei das Vorauslöseelement (47) der ersten Vorauslöseeinrichtung (37) von einem auf dem zweiten Förderabschnitt (13) stillstehenden Fördergut (2) aktivierbar und das Auslöseelement (48) der ersten Auslöseeinrichtung (39) von einem auf dem ersten Förderabschnitt (13) befindlichen weiteren Fördergut (3) aktivierbar ist,
**gekennzeichnet durch** die folgenden Verfahrensschritte:
a) Das Fördergut (2) wird in Förderrichtung (6) auf der Rollenbahn (1) transportiert, wobei das Fördergut (2) in zeitlicher Abfolge zumindest zwei benachbarte Förderabschnitte (11, 12, 13) passiert,
b) Ein auf dem - in Förderrichtung (6) betrachtet - nachgelagerten, zweiten Förderabschnitt (13) befindliches, stillstehendes Fördergut (2) aktiviert das Vorauslöseelement (47) der Vorauslöseeinrichtung (37) der ersten Betätigungseinrichtung (35), sodass das Vorauslöseelement (47) in seine Vorauslösestellung überführt wird,
c) Ein auf dem in Förderrichtung (6) betrachtet vorgelagerten, ersten Förderabschnitt (12) befindliches, stillstehendes Fördergut (3) aktiviert das Auslöseelement (48) der Auslöseeinrichtung (39) der ersten Betätigungseinrichtung (35), sodass dieses Auslöseelement (48) in seine Auslösestellung überführt wird,
d) Das Schaltelement (10) wird sodann von seiner Aktivstellung in seine Passivstellung überführt.
e) In der Passivstellung des Schaltelements (10) wird der Kraftschluss zwischen der Antriebskette (8) und den Förderrollen (5) des ersten Förderabschnitts (12) ausgeschaltet, sodass die Förderrollen (5) bei diesem ersten Förderabschnitt (12) zum Stillstand kommen.

13. Verfahren nach Anspruch 12 sofern dieser auf Anspruch 11 zurückbezogen ist, **dadurch gekennzeichnet, dass**
- Bei einer Überführung des Vorauslöseelements (47) in seine Vorauslösestellung wird das Zugmittel (34) von seinem Ruhezustand in seinen Zwischenzustand überführt,
- Bei einer Überführung des Auslöseelements (48) in seine Auslösestellung wird das Zugmittel (34) von seinem Zwischenzustand in seinen Schaltzustand überführt,
- Eine Überführung des Zugmittels (34) von seinem Ruhezustand in seinen Schaltzustand bewirkt, dass das Schaltelement (10) von seiner Aktivstellung in seine Passivstellung überführt wird.
